# EUROPÄISCHE PATENTANMELDUNG

(11) **EP 4 765 413 A1**
(43) Veröffentlichungstag der Anmeldung: **24.06.2026**
(21) Anmeldenummer: 25224074.2
(22) Anmeldetag: 16.12.2025
(51) Int. Cl.: H01M 50/317, H01M 50/333, H01M 50/204, F16K 17/16

(54) **MONTAGESYSTEM UND VERFAHREN ZUM ANBRINGEN EINES EINSATZTEILS IN EINER WANDÖFFNUNG INSBESONDERE EINES GEHÄUSES UND BAUSATZ FÜR EIN SOLCHES MONTAGESYSTEM**

(30) Priorität: 18.12.2024 DE 102024138772
(71) Anmelder: Hugo Benzing GmbH & Co. KG, 70825 Korntal-Münchingen (DE)
(72) Erfinder: Gürtürk, Uygar, 70374 Stuttgart (DE)
(74) Vertreter: Fleck, Hermann-Josef

(57) **Zusammenfassung**

Die Erfindung bezieht sich auf Montagesystem (1) zum Anbringen eines Einsatzteils in einer Wandöffnung insbesondere eines Gehäuses umfassend
- eine in einem Wandabschnitt (40), insbesondere eines Gehäuses, angeordnete oder anordenbare Schnittstelle (4), die eine um eine Durchführachse (A) angeordnete Schnittstellenöffnung (44) aufweist, welche von einer Randkontur (41) mit radial nach innen ragenden Haltevorsprüngen (42) und dazwischen liegenden Lücken (43) umlaufend umfasst ist,
- einen Fixiereinsatz (3), der einen Einführabschnitt (31) aufweist, welcher in einer Einführrichtung (R) in einer ersten Drehstellung (P1) von einer Außenseite durch die Schnittstellenöffnung (44) durchführbar und umfangsseitig mit radial aufgesetzten und sich in Umlaufrichtung erstreckenden Fixierelementen (32) und mit einer zylindrischen zentralen durchgehenden Einschrauböffnung (33) mit einem Innengewinde (34) versehen ist und an seinem bezüglich der Einführrichtung (R) hinteren Endabschnitt mit einer die Einschrauböffnung (33) umgebenden und die Schnittstellenöffnung (44) zumindest abschnittsweise radial überragenden Anschlaganordnung (30) begrenzt ist, und
- ein Einsatzteil, das als ein in das Innengewinde (34) einschraubbares Einschraubteil (2) mit einem Schraubstutzen (20) ausgebildet ist, welcher an seinem in Einführrichtung (R) hinteren Abschnitt in einen die Anschlaganordnung (30) im montierten Zustand ringsum vollständig umfassenden und an der Außenseite des Wandabschnitts (40) mit seiner Anlageseite in Anschlag gebrachten Anlageflansch (21) übergeht, in dem ein vollständig um den Schraubstutzen (20) umlaufender, von einer Innenwandfläche des Anlageflansches (21) umgrenzter Ringraum (24) ausgebildet ist

## Beschreibung

Die Erfindung bezieht sich auf ein Montagesystem zum Anbringen eines Einsatzteils in einer Wandöffnung insbesondere eines Gehäuses umfassend eine in dem Wandabschnitt angeordnete Schnittstelle, die eine von einer Randkontur um eine Durchführachse umlaufend umfasste Schnittstellenöffnung aufweist, sowie einen in die Schnittstellenöffnung eingesetzten Fixiereinsatz mit einer die Schnittstellenöffnung radial überragenden Anschlaganordnung und weiterhin umfassend ein in den Fixiereinsatz eingesetztes Einsatzteil.

Ein Montagesystem und ein Verfahren dieser Art zum Anbringen eines Einsatzteils in einer Wandöffnung ist der DE 10 2022 119 421 A1 entnehmbar. Dieses bekannte Montagesystem dient zum Befestigen eines Bauteils an einem Trägerbauteil, wie z. B. einem Karosserieblech. Dabei ist in einem Öffnungsausschnitt ein Führungskäfig eingesetzt, in dem ein Befestigungselement drehbar gelagert aufgenommen ist, welches ein Innengewinde aufweist. In dieses greift ein Außengewindeabschnitt einer linear (axial) entlang einer Linearführung eindrückbaren Druckspindel ein, wodurch sich das Befestigungselement beim Eindrücken der Druckspindel dreht, dabei durch das Gewinde auch axial bewegt wird und mittels Befestigungsflächen das Trägerbauteil einklemmt. Dieses bekannte Montagesystem baut infolge der weitgehend axial ausgestalteten Funktionsmechanismen relativ hoch.

Ein weiteres Montagesystem zum Anbringen eines Einsatzteils in einer Wandöffnung eines Gehäuses, beispielsweise eines Batteriegehäuses, ist in der DE 10 2019 103 431 B3 gezeigt. Dieses bekannte Montagesystem ist als Druckentlastungsvorrichtung zum Abbau von in einem zellenartigen Hohlraum, wie z. B. einer Batteriezelle, entstehendem Druck ausgebildet, wobei das Einsatzteil mittels einer Federanordnung von dem das Gehäuse umgebenden Außenraum durch die Wandöffnung, die gleichzeitig eine von einer Randkontur umgebene Schnittstellenöffnung bildet, mit der Federanordnung in das Innere des Gehäuses einführbar ist und ein außen an der Druckentlastungsvorrichtung vorhandener Deckel mit seinem radial über den Randbereich der Wandöffnung umlaufend überstehenden Deckelrandbereich auf der Außenseite des Wandabschnitts um die Wandöffnung anliegt. Die als Federklammer ausgebildete Federanordnung weist mehrere radial nach außen vorstehende Federzungen mit zum Gehäuseinnern hin eingemuldeten endseitigen Federabschnitten auf, die beim Einsetzen der Druckentlastungsvorrichtung durch Eindrücken von außen federnd radial nach innen ausweichen und elastisch nach außen schwenken, sobald ihre Enden unter die Innenseite des die Wandöffnung umgebenden Wandbereichs gelangen. Dabei ist der Abstand zwischen dem Deckelrand und den Enden der Federabschnitte auf die Dicke des Wandabschnitts um die Wandöffnung so abgestimmt, dass der Deckel unter gewissem Druck auf der Außenseite des Wandabschnitts nach der Montage angedrückt bleibt. Um eine Anpassung an unterschiedliche Wandstärken zu erhalten, ist in der Druckentlastungsvorrichtung ein zentraler Verbindungsadapter, der die Federklammer mit ihren Federzungen hält, austauschbar in einem Halteabschnitt eingesetzt. Zur Montage an verschieden dicken Wandabschnitten bzw. daran ausgebildeten Schnittstellen sind verschiedene austauschbare Verbindungsadapter vorgesehen. Zudem ist die Druckentlastungsfunktion zum Abheben des Deckels bei Überdruck mit der Montage- und Haltefunktion der Federanordnung verbunden, wodurch die Montagemöglichkeiten unterschiedlicher Einsatzteile beschränkt sind.

Ein Druckentlastungsdeckel, der mit einer ähnlichen Federklammeranordnung mit beim Montieren elastisch einschwenkbaren Endabschnitten versehen ist wie vorstehend beschrieben, ist auch in der EP 3 539 172 B1 gezeigt, wobei jedoch kein austauschbarer Verbindungsadapter zur Anpassung an verschieden dicke Wandabschnitte vorgesehen ist.

Der vorliegenden Erfindung liegt die Aufgabe zugrunde, ein Montagesystem der eingangs beschriebenen Art bereitzustellen, das bei möglichst einfacher Montage ein Anbringen vielfältiger unterschiedlicher Einsatzteile in einer Wandöffnung eines Wandabschnitts insbesondere eines Gehäuses ermöglicht. Auch ein Verfahren zum einfachen, flexiblen Anbringen eines Einsatzteils in einer Wandöffnung soll angegeben werden und auch ein Bausatz mit einem Montagesystem für eine einfache Anbringung von Einsatzteilen in der Wandöffnung eines Wandabschnitts insbesondere eines Gehäuses soll bereitgestellt werden.

Diese Aufgabe wird erfindungsgemäß bei einem Montagesystem zum Anbringen eines Einsatzteils in einer Wandöffnung insbesondere eines Gehäuses mit den Merkmalen des Anspruchs 1 gelöst. Das Montagesystem umfasst
- eine in einem Wandabschnitt, insbesondere eines Gehäuses, angeordnete oder anordenbare Schnittstelle, die eine um eine Durchführachse angeordnete Schnittstellenöffnung aufweist, welche von einer Randkontur mit radial nach innen ragenden Haltevorsprüngen und dazwischen liegenden Lücken umlaufend umfasst ist,
- einen Fixiereinsatz, der einen Einführabschnitt aufweist, welcher in einer Einführrichtung in einer ersten Drehstellung von einer Außenseite durch die Schnittstellenöffnung durchführbar und umfangsseitig mit radial aufgesetzten und sich in Umlaufrichtung erstreckenden Fixierelementen und innenseitig mit einem Innengewinde versehen ist und an seinem bezüglich der Einführrichtung hinteren Endabschnitt mit einer die Einschrauböffnung umgebenden und die Schnittstellenöffnung zumindest abschnittsweise radial überragenden Anschlaganordnung begrenzt ist, und
- ein Einsatzteil, das als ein in das Innengewinde einschraubbares Einschraubteil mit einem Schraubstutzen ausgebildet ist, welcher an seinem in Einführrichtung hinteren Abschnitt in einen die Anschlaganordnung im montierten Zustand ringsum vollständig umfassenden und an der Außenseite des Wandabschnitts mit einer Anlageseite in Anschlag gebrachten Anlageflansch übergeht, in dem ein vollständig um den Schraubstutzen umlaufender, von einer Innenwandfläche des Anlageflansches umgrenzter Ringraum ausgebildet ist,
wobei der Fixiereinsatz im montierten Zustand mit den Fixierelementen in eine die Haltevorsprünge hintergreifende zweite Drehstellung gebracht ist und mit seiner Anschlaganordnung vermittels des eingeschraubten Einschraubteils in den Ringraum eingezogen ist, wobei sich der Anlageflansch mit seiner Anlageseite mit seiner den Ringraum radial außen umgebenden Anlagefläche auf der Außenseite des Wandabschnitts um die Schnittstellenöffnung abstützt.

Bei dem Verfahren ist vorgesehen, dass in einem Wandabschnitt insbesondere eines Gehäuses mittels eines Montagesystems
- in einem ersten Schritt in einem Wandabschnitt insbesondere eines Gehäuses eine Schnittstelle bereitgestellt wird, die eine um eine Durchführachse angeordnete Schnittstellenöffnung aufweist, welche von einer Randkontur mit radial nach innen ragenden Haltevorsprüngen und dazwischen liegenden Lücken umlaufend umfasst wird,
- in einem weiteren Schritt in die Schnittstellenöffnung in einer Einführrichtung in Richtung der Durchführachse ein Fixiereinsatz mit einem Einführabschnitt in einer ersten Drehstellung, in der radial außen auf dem Einführabschnitt angeordnete, sich in Umlaufrichtung erstreckende Fixierelemente in axialer Richtung mit den Lücken der Schnittstelle in Deckung gebracht sind, eingeführt und anschließend in eine zweite Drehstellung gedreht wird, in der die Fixierelemente in axialer Richtung mit den Haltevorsprüngen in Deckung gebracht sind, wobei eine bezüglich der Einführrichtung am hinteren Endabschnitt des Einführabschnitts angeformte Anschlaganordnung die Schnittstellenöffnung außen radial übergreift, und
- in einem nachfolgenden Schritt ein Einschraubteil, das bereits vor dem Einsetzen des Fixierteils in die Schnittstellenöffnung in ein Innengewinde des Einführabschnitts eingeschraubt wurde oder nach Einsetzen des Fixierteils eingeschraubt wird, fest angezogen wird, so dass es mit einem die Anschlaganordnung des Fixiereinsatzes radialseitig umfassenden Anlageflansch gegen die Außenseite des Wandabschnitts bewegt und der Fixiereinsatz mit seinen Fixierelementen gegen die Haltevorsprünge der Schnittstellenöffnung gezogen wird, sodass bei fertiger Montage der die Schnittstellenöffnung umgebende Bereich des Wandabschnitts fest und gedichtet zwischen der Anlagefläche des Anlageflansches (gegebenenfalls unter Zwischenlage eines Dichtungsrings) und den Fixierelementen des Fixierteils eingespannt wird.

Bei dem Bausatz für ein entsprechendes Montagesystem ist vorgesehen, dass mindestens zwei verschiedene Einschraubteile vorhanden sind, von denen mindestens eins als Druckentlastungseinsatz ausgebildet ist.

Das so nach Anspruch 1 aufgebaute Montagesystem lässt sich einfach in einem Wandabschnitt beispielsweise der Wandung eines Gehäuses einbauen, wobei die Schnittstelle z. B. unmittelbar in den Wandabschnitt eingearbeitet bzw. eingeformt wird und wobei die Randkontur in der Wandung eines fertigen Gehäuses oder einem Wandabschnitt vor Zusammenbau eines Gehäuses z. B. durch Ausstanzen oder einen anderen Schneidprozess oder Formprozess eingearbeitet werden kann. Der entsprechend angepasste Fixiereinsatz kann in axialer Einführrichtung durch die Schnittstellenöffnung eingeführt werden, wobei er mit seinen Fixierelementen durch die Lücken der Randkontur geführt wird und anschließend so gedreht werden, dass die Fixierelemente die Haltevorsprünge um die Schnittstellenöffnung auf der Innenseite des Wandabschnitts bzw. des Gehäuses hinterwandern, wobei die vorzugsweise ringförmige Anschlaganordnung, die die Schnittstellenöffnung randseitig radial überragt, bezüglich der Außenseite bzw. Umgebungsseite des Wandabschnitts angeordnet ist. Beim Einschrauben des als Einschraubteil ausgebildeten Einsatzteils mit seinem Außengewinde in das Innengewinde des Fixiereinsatzes, wobei der radial nach außen über die Anschlaganordnung überstehende Anlageflansch beim Einschrauben sich auf der Außenseite des Wandabschnitts mit seiner Anlagefläche abstützt, wird der Fixiereinsatz nach und nach entgegen der Einführrichtung angezogen, bis die Fixierelemente die jeweils zugeordneten Haltevorsprünge der Schnittstelle von der Innenseite her übergreifen. Vorteilhaft wird der Fixiereinsatz beim Einschrauben des Einsatzteils bzw. Einschraubteils von der ersten Drehstellung beim Einführen in die zweite Drehstellung zum Hintergreifen der Haltevorsprünge mittels der Fixierelemente durch den Einschraubvorgang mitgedreht, bis die Fixierelemente mit den an ihnen ausgebildeten Anschlagstegen an einem bezüglich der Eindrehrichtung hinteren Rand der Haltevorsprünge anstoßen, sodass sie sich beim weiteren Einschrauben des Einsatzteils aus dieser zweiten Drehstellung nicht weiter mit dem Einsatzteil mitdrehen und der Fixiereinsatz letztlich in die Fixierlage gebracht wird, in der der Randbereich des Wandabschnitts bzw. der Schnittstelle um die Wandöffnung bzw. Schnittstellenöffnung zwischen den Fixierelementen und der Anlagefläche des Anlageflanschs eingespannt ist. Ersichtlich ist somit die Festlegung des Montagesystems an dem Wandabschnitt über einen großen Bereich unabhängig von der Dicke des Wandabschnitts um die Wandöffnung bzw. Schnittstellenöffnung und kann an Wandungen bzw. Gehäusen mit unterschiedlichen Wandstärken stets in gleicher Weise einfach und ohne weitere Adapterteile angebracht werden. Entsprechend einfach ist auch das Montageverfahren des Montagesystems.

Da in das Innengewinde des Fixiereinsatzes unterschiedliche Einsatzteile, wie insbesondere auch Druckentlastungsvorrichtungen, lediglich mit in gleicher Weise ausgebildetem Außengewinde eingeschraubt werden können, wird eine einfache Montage für verschiedenartige Einsatzteile in einem Wandabschnitt insbesondere eines Gehäuses, wie z. B. eines Batteriegehäuses, erreicht. Dementsprechend kann ein Bausatz mit wenigen Montageteilen für die Anbringung von vielerlei Einsatzteilen für verschiedene Funktionen bereitgestellt werden.

Ein für den Aufbau und eine einfache Montage vorteilhafte Ausgestaltung des Montagesystems besteht darin, dass die Fixierelemente jeweils einen in Umlaufrichtung verlaufenden Haltesteg aufweisen, wobei die Haltestege im montierten Zustand jeweils einen ihnen zugeordneten Haltevorsprung hintergreifen, und dass die Haltestege an ihrem in Eindrehrichtung vorderen Ende jeweils mit einer entgegen der Einführrichtung zeigenden Haltenase und an ihrem bezüglich der Eindrehrichtung hinteren Ende mit einem in Einführrichtung verlaufenden Anschlagsteg versehen sind und dass der lichte Abstand zwischen der Haltenase und dem Anschlagsteg jeweils an die Ausdehnung eines Haltevorsprungs so angepasst ist, dass im montierten Zustand jeweils ein Haltevorsprung in Eindrehrichtung an seinem Vorderrand von einer Haltenase und an seinem Hinterrand von einem Haltesteg eingefasst ist. Die Haltenasen können dabei so ausgebildet sein, dass sie fest an den betreffenden Haltevorsprüngen der Schnittstelle gehalten und der Fixiereinsatz praktisch (z. B. nicht zerstörungsfrei) nicht zurückdrehbar oder aber gegen gewissen, vorgebbaren Widerstand zurückdrehbar ist, sodass der Fixiereinsatz entsprechend dauerhaft an dem Wandabschnitt gehalten oder entnehmbar angebracht sein kann.

Vorteilhaft für die Montage ist des Weiteren, dass die Eindrehrichtung von der ersten Drehstellung in die zweite Drehstellung der Einschraubrichtung des Einschraubteils entspricht. Mit dem Einschrauben des Einsatzteils kann somit auch der Fixiereinsatz in seine Haltestellung gebracht werden.

Ein sicheres Abdichten um die Schnittstellenöffnung mit eingeführtem Fixiereinsatz wird dadurch erreicht, dass der Innenradius der den Ringraum umgebenden Anlagefläche des Anlageflansches mindestens so groß ist wie der Außenradius der Schnittstellenöffnung im Bereich der Lücken.

Eine für das Einsetzen des Einsatzteils mit verschiedenen Haltemöglichkeiten vorteilhafte Ausgestaltung des Montagesystems besteht des Weiteren darin, dass die den Ringraum umgebende Innenwandfläche des Anlageflansches umfangsseitig mit einer Eingriffstruktur versehen ist, welche sich in Umlaufrichtung abwechselnde radial in dem Ringraum vortretende Eingriffelemente und radial zurücktretende Vertiefungen aufweist, und dass die Anschlaganordnung des Fixiereinsatzes ringförmig ausgebildet ist und an ihrem radial außen liegenden Umfangsrand mit einer Eingriffgegenstruktur versehen ist, die beim Einschrauben des Einschraubteils in die Einschrauböffnung des Fixiereinsatzes elastisch in die Vertiefungen der Eingriffstruktur eintretende Eingriffgegenelemente aufweist. Damit können wahlweise unterschiedlich ausgebildete Einsatzteile zum festen Verbleib oder auswechselbar an dem Montagesystem mit dem Fixiereinsatz angebracht werden.

Dazu bestehen vorteilhafte alternative Ausbildungen des Montagesystems darin, dass die Eingriffelemente mit in Eindrehrichtung flachen Gleitflanken und entgegen der Eindrehrichtung angeordneten steileren Stützflanken versehen sind und dass die Eingriffgegenelemente mit beim Eindrehen an den Gleitflanken der Eingriffelemente entlang gleitenden Gleitflächen und entweder mit sich entgegen der Eindrehrichtung an den Stützflanken abstützenden Stützflächen versehen sind oder mit weiteren Gleitflächen versehen sind, die beim Drehen entgegen der Eindrehrichtung an der Eingriffstruktur entlang gleiten. Somit können bei gleicher Eingriffstruktur des Anlageflansches durch einfache Modifikation des Fixiersatzes im Bereich der Eingriffgegenelemente zum Erreichen der beiden unterschiedlichen Fixierarten, dauerhafte Fixierung bzw. lösbare Fixierung, fest verbleibende oder einfach austauschbare Einsatzteile zur Anwendung kommen bzw. zur Verfügung gestellt werden.

Eine für die Funktion und den Aufbau vorteilhafte Ausbildung besteht dabei darin, dass die Eingriffgegenelemente am Außenrandbereich der Anschlaganordnung mittels jeweiliger Federzungen angebunden, insbesondere einstückig angeformt, sind.

Eine alternative vereinfachte Ausbildung des Montagesystems kann auch z. B. darin bestehen, dass die Innenwandfläche des Anlageflansches mit einer Eingriffstruktur versehen ist, welche sich in Umlaufrichtung abwechselnde radial in den Ringraum vortretende Eingriffelemente und radial zurücktretende Vertiefungen aufweist, und dass die Anschlaganordnung des Fixiereinsatzes ringförmig ohne Eingriffgegenstruktur ausgebildet ist.

Eine zusätzliche oder alternative Ausgestaltungsmöglichkeit der Eingriffstruktur und Griffgegenstruktur besteht z. B. darin, dass das Einschraubteil an einem den Ringraum auf dessen entgegen der Einführrichtung begrenzenden kreisringförmigen Innenwandflächenbereich eine Eingriffstruktur aufweist, welche sich in Umlaufrichtung abwechselnde axial in den Ringraum vortretende Eingriffelemente und axial zurücktretende Vertiefungen aufweist, und dass die ringförmig ausgebildete Anschlaganordnung des Fixiereinsatzes in ihrer dem kreisringförmigen Innenwandflächenbereich zugewandten Stirnseite mit einer Eingriffgegenstruktur versehen ist oder keine Eingriffgegenstruktur aufweist.

Eine gute, definierte Abdichtung zwischen einem Gehäuseinnenraum und der äußeren Umgebung durch das Montagesystem wird dadurch erreicht, dass an der Anlagefläche des Anlageflansches ein umlaufendes Dichtungselement zur Abdichtung zwischen der Außenseite der Schnittstelle bzw. des Wandabschnitts und dem Anlageflansch angeordnet ist.

Eine vorteilhafte Funktion des Montagesystems wird dadurch erfüllt, dass das Einschraubteil als Druckentlastungseinsatz ausgebildet ist, der bei Anordnung des Montagesystems in einem Wandabschnitt eines Gehäuses, beispielsweise eines Batteriegehäuses, bei Überschreiten einer vorgegebenen Druckdifferenz zwischen dem Gehäuseinnern und der Gehäuseumgebung eine in ihr ausgebildete Druckausgleichskanalanordnung öffnet. Damit kann ein Gehäuse vor einem nicht erwünschten, eine Druckdifferenzschwelle überschreitenden Druckunterschied in seinem Innenraum gegenüber der äußeren Umgebung geschützt werden, beispielsweise vor einem zu hohen, eine Gefährdungssituation darstellenden Innendruckaufbau. Durch das einfache Anbringen des Einsatzteils als Druckentlastungseinsatz kann damit eine einfache Abstimmung des Einsatzteils auf eine jeweils zugelassene Druckschwelle bzw. zu erfüllende Schutzfunktion erfolgen.

Dabei bestehen verschiedene Ausgestaltungsmöglichkeiten darin, dass in dem Strömungsweg der Druckausgleichskanalanordnung eine fluidundurchlässige Membran und/oder eine gasdurchlässige aber flüssigkeitsundurchlässige bzw. semipermeable Membran angeordnet ist/sind und dass das Einschraubteil auf seiner Außenseite mit einer Schutzabdeckung versehen ist, um feste Partikel von der Membran abzuhalten.

Bei dem Bausatz ist für verschiedene Anwendungsfälle vorteilhaft vorgesehen, dass ein Druckentlastungseinsatz als Verschlusselement in einer Druckausgleichskanalanordnung mindestens ein mittels Federkraft einer Federanordnung in Schließstellung gehaltenes, insbesondere plattenförmiges oder pilzkopfförmiges, Schließelement aufweist und ein weiterer Druckentlastungseinsatz als Verschlusselement eine fluiddichte Membran oder eine gasdurchlässige aber flüssigkeitsdichte Membran aufweist.

Die Erfindung wird nachfolgend anhand von Ausführungsbeispielen unter Bezugnahme auf die Zeichnungen näher erläutert. Es zeigen:
- Fig. 1: ein erfindungsgemäßes Montagesystem mit seinen Komponenten, nämlich Einsatzteil (Teilbild a)), Fixiereinsatz (Teilbild b)) und Schnittstelle (Teilbild c)), in perspektivischer Darstellung von schräg oben,
- Fig. 2: ein in einen Fixiereinsatz eingesetztes Einsatzteil mit demontierbarer Verdrehsicherung (Teilbild a)) und verriegelter Verdrehsicherung (Teilbild b)),
- Fig. 3: ein Einsatzteil des Montagesystems vor seinem Einsatz in ein Fixierteil (Teilbild a)) und ein in eine Schnittstelle eingesetzter Fixiereinsatz (Teilbild b)) jeweils in perspektivischer Darstellung von schräg unten,
- Fig. 4: ein in einem Fixiereinsatz vormontiertes Einsatzteil (Teilbild a)) in perspektivischer Darstellung von schräg unten und eine Schnittstelle zum Aufnehmen des im Fixiereinsatz vormontierten Einsatzteils (Teilbild b)) in perspektivischer Ansicht von schräg oben,
- Fig. 5A: einen in eine Schnittstelle einer ersten Drehstellung axial eingeführten aber noch nicht durch Drehen fixierten Fixiereinsatz mit darin eingesetztem Einsatzteil in perspektivischer Ansicht von schräg unten,
- Fig. 5B: den in der Schnittstelle eingeführten und durch Drehen in eine zweite Drehstellung darin fixierten Fixiereinsatz mit eingesetztem Einsatzteil in perspektivischer Ansicht von unten und
- Fig. 5C: das Montagesystem mit seinen fertig montierten Komponenten, nämlich Schnittstelle, darin fixiertem Fixiereinsatz und durch Einschrauben außen auf dem Wandabschnitt der Schnittstelle bzw. einer Wandung um die Schnittstellenöffnung anliegendem Einsatzteil, in seitlicher Ansicht.

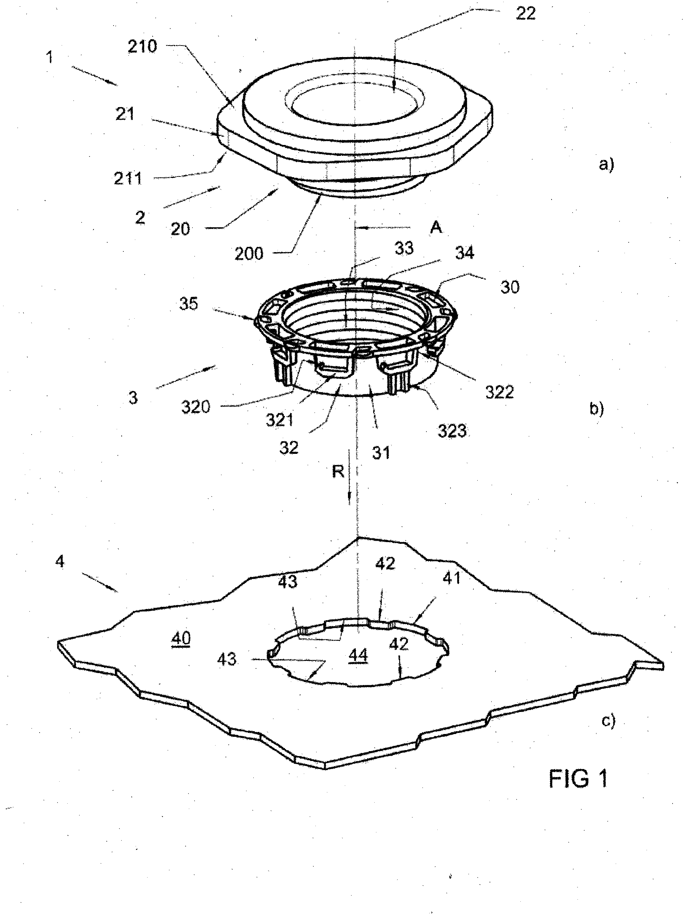

Fig. 1 zeigt in Teilbildern a), b) und c) ein Montagesystem 1 mit seinen Komponenten, nämlich Einsatzteil in Ausbildung eines einschraubbaren Einschraubteils 2 (Teilbild a)), Fixiereinsatz 3 (Teilbild b)) und Schnittstelle 4 mit einer von einer Randkontur 41 umgebenen Schnittstellenöffnung 44 und einem Wandabschnitt 40 (Teilbild c)), jeweils in perspektivischer Darstellung von schräg oben.

Die Schnittstelle 4 mit der in dem Wandabschnitt 40 eingebrachten Randkontur 41 ist in einer Wandung beispielsweise eines Gehäuses ausgebildet bzw. kann mit dem Wandabschnitt 40 an einer Gehäusewandung mit entsprechend großem Ausschnitt angebracht werden. Die Randkontur 41 der Schnittstelle 4 weist umlaufend abwechselnd angeordnete radial zum Zentrum hin gerichtete Haltevorsprünge 42 und dazwischen angeordnete Lücken 43 auf und ist um die Schnittstellenöffnung konzentrisch zu einer Durchführachse A angeordnet. Die Wandstärke des Wandabschnitts der Schnittstelle 4 bzw. der um die Schnittstellenöffnung 44 liegenden Gehäusewandung kann eine unterschiedliche Dicke in Richtung der Durchführachse A aufweisen. Die Schnittstellenöffnung mit ihrer Randkontur 41 kann bereits beim Herstellen der Wandung z. B. durch einen Schneidprozess, wie Stanzen, Fräsen oder Laserschneiden oder durch einen anderen Formungsprozess oder auch nachträglich in einen Wandabschnitt 40 der Gehäusewandung bzw. der Schnittstelle 4 eingearbeitet werden.

Die Schnittstelle 4 weist also neben der Schnittstellenöffnung 44 die Randkontur 41 und einen diese umgebenden Wandabschnitt 40 auf.

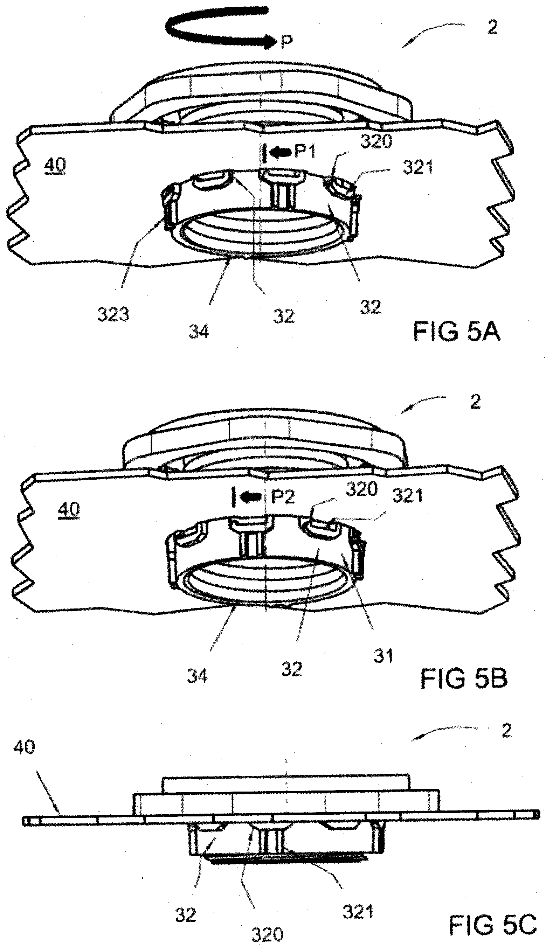

Der Fixiereinsatz 3 weist einen in einer ersten Drehstellung P1 (vgl. Fig. 5A) durch die Schnittstellenöffnung 44 in einer Einführrichtung R durchführbaren Einführabschnitt 31 und eine an dessen bezüglich der Einführrichtung R hinterem Endbereich angebrachte, vorzugsweise einstückig angeformte Anschlaganordnung 30 auf, die bei dem gezeigten Ausführungsbeispiel als vollständig umlaufender, strukturierter Ringabschnitt ausgebildet ist. Die Anschlaganordnung 30 und der Einführabschnitt 31 sind konzentrisch und koaxial zu einer zentralen Achse angeordnet, die im montierten Zustand der Durchführachse A entspricht. Der Durchmesser des Einführabschnitts 31 ist etwas geringer als der Durchmesser der Schnittstellenöffnung 44 zwischen den radial innen liegenden Randbereichen der Haltevorsprünge 42, um ein einfaches Einführen des Einführabschnitts 31 zu ermöglichen. Um die zentrale Achse ist eine koaxial durch die Anschlaganordnung 30 und den Einführabschnitt 31 verlaufende zylindrische Durchgangsöffnung angeordnet, die umfangseitig mit einem Innengewinde 34 versehen als Einschrauböffnung 33 ausgebildet ist.

Auf der umfangseitigen, ebenfalls zylindrischen Außenseite des Einführabschnitts 31 sind Fixierelemente 32 aufgetragen, vorzugsweise einstückig angeformt, die in ihrer Auftragdicke und in Umlaufrichtung so dimensioniert und beabstandet sind, dass sie durch die Lücken 43 der Schnittstelle 4 beim Einführen in Einführrichtung in der ersten Drehstellung P1 (vgl. Fig. 5A) hindurchgeführt werden können. Die Fixierelemente 32 weisen einen in Umlaufrichtung verlaufenden Haltesteg 321 auf, an dessen in Drehrichtung aus der ersten Drehstellung P1 in eine zweite Drehstellung P2 (vgl. Fig. 5B), der Fixierstellung, liegenden vorderen Endabschnitt eine entgegen der Einführrichtung vorstehende Haltenase 320 vorhanden ist und an dessen entgegen der Drehrichtung hinteren Ende ein entgegen der Einführrichtung R verlaufender Anschlagsteg 322 vorhanden ist. Der lichte Abstand zwischen der Haltenase 320 und dem Anschlagsteg 322 ist dabei so groß gewählt, dass ein beim Fixieren jeweils zugeordneter Haltevorsprung 42 der Schnittstelle 4 dazwischen passt. Bei der gezeigten Ausführung ist der Haltesteg 321 auf seiner in Einführrichtung R gelegenen Seite mit in Einführrichtung R zeigenden Verstärkungselementen in Form von Verstärkungsrippen 323 gegen eine Zugbeanspruchung entgegen der Einführrichtung R verstärkt.

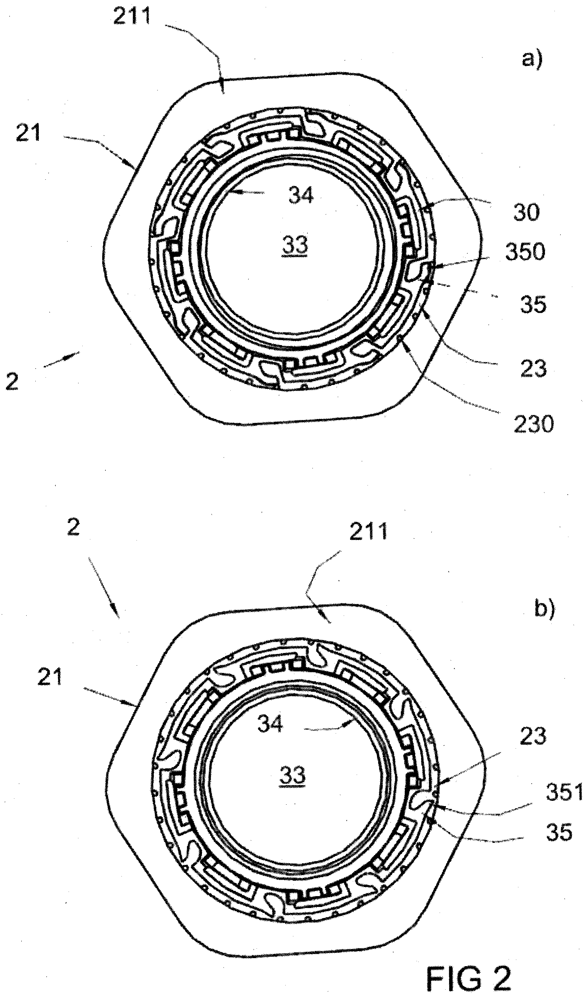

Die ringförmig ausgebildete Anschlaganordnung 30 des Fixiereinsatzes 3 weist eine Verdrehsicherung für das einzusetzende bzw. einzuschraubende Einsatzteil in Form des Einschraubteils 2 auf, die bei dem gezeigten Ausführungsbeispiel als mit Federzungen 35 versehene Sicherungselemente ausgebildet ist. Die Federzungen 35 sind im Außenumfangsbereich der Anschlaganordnung 30 in Form angeformter Fortsätze elastisch angebunden und ragen gegenüber einer angenommenen Tangente geringfügig radial über den im Übrigen zumindest größtenteils kreisförmigen Umfang hinaus vor, wobei sie entgegen der Einschraubrichtung P (vgl. Fig. 5A) angestellt sind. In ihrem freien Endbereich sind die Federzungen als Eingriffgegenelemente in Form jeweiliger Anlagestücke 350 oder Abstützstücke 351 ausgebildet, wie in den Teilbildern a) und b) der Fig. 2 deutlicher gezeigt. Die Federzungen 35 sind entsprechend dem Fixiereinsatz 3 vorteilhaft aus Kunststoffmaterial geformt und federelastisch ausgebildet, sodass sie entgegen der als Auslenkkraft wirkenden Federkraft nach innen mittels einer genügend großen Einlenkkraft eingeschwenkt werden können. Denkbar ist z. B. auch eine Herstellung des Fixiereinsatzes aus Metall.

In dem Teilbild a) der Fig. 1 ist als weitere Komponente des Montagesystems 1 das als Einschraubteil 2 ausgebildete Einsatzteil mit einem bei Montage in der Einführrichtung R vorstehenden Schraubstutzen 20 und einem an dessen hinterem Endbereich angebrachten, insbesondere angeformten, Anlageflansch 21 gezeigt, der im montierten Zustand vollständig umlaufend radial über die Randkontur 41 der Schnittstelle 4 und die Anschlaganordnung 30, die ihrerseits mit ihrer Anschlagfläche radial über die Randkontur 41 der Schnittstelle 4 zumindest über deren Haltevorsprünge 42 vorsteht, hinausragt. Der Schraubstutzen 20 kann mit einer zentral, (bzgl. der Montage) beispielsweise konzentrisch zu der Durchführachse A ausgebildeten Aufnahmeöffnung 22 versehen sein, die sich von der bei Montage der Umgebung bzw. dem Außenraum zuzukehrenden Außenseite 210 des Anlageflansches 21 durch den Schraubstutzen 20 hindurch erstreckt, sodass sich z. B. ein ganz oder teilweise geschlossener, insbesondere ganz oder teilweise freigebbarer, Durchgangskanal von der Umgebung eines Gehäuses durch den Fixiereinsatz 3 und die Umwandung bzw. Schnittstellenöffnung 44 in den Innenraum eines Gehäuses ergibt oder eingebracht werden kann.

In die Aufnahmeöffnung 22 können z. B. unterschiedliche Elemente eingesetzt sein, die einen Fluidaustausch zwischen der Umgebung und dem Innenraum beispielsweise bis zu einem vorgebbaren Differenzdruck verhindern und darüber ermöglichen oder auch z. B. nur einen Flüssigkeitsaustausch verhindern, jedoch einen Gasaustausch in beiden Richtungen oder auch nur einen Gasaustritt bei Überdruck im Innern in die Umgebung ermöglichen. Derartige Einbauteile können Membranelemente und/oder z. B. federgelagerte Ventilelemente sein. Alternativ kann der Anlageflansch 21 aber auch mit einem vollkommen geschlossenes Deckelteil versehen sein. Es ist auch möglich, in der Aufnahmeöffnung andere Einbauteile einzusetzen, wie z. B. Lüfter, Kameramodul, USB-Stecker oder dergleichen.

Im montierten Zustand liegt der Anlageflansch mit seiner von der Außenseite 210 abgekehrten Anlageseite 211 dicht an der Außenseite des Wandabschnitts radial beabstandet von der Schnittstellenöffnung 44 an, wobei zwischen der Anlageseite 211 und der Außenseite des Wandabschnitts 40 vorteilhaft ein umlaufendes Dichtelement bzw. ein Dichtring angeordnet, beispielsweise in der Anlageseite 211 in eine umlaufende Nut eingesetzt sein kann.

Der Schraubstutzen 20 des Einschraubteils 2 ist an seinem Außenumfang mit einem Außengewinde 200 versehen, welches zum Eingriff in das Innengewinde 34 des Fixiereinsatzes 3 entsprechend angepasst ist, sodass das Einsatzteil als Einschraubteil 2 zur Vormontage, bei der der Fixiereinsatz 3 noch nicht in die Schnittstellenöffnung 44 eingesetzt ist, oder zur Endmontage, bei der der Fixiereinsatz 3 in die Schnittstellenöffnung 44 eingeführt und in dieser fixiert ist, in den Fixiereinsatz 3 einschraubbar ist.

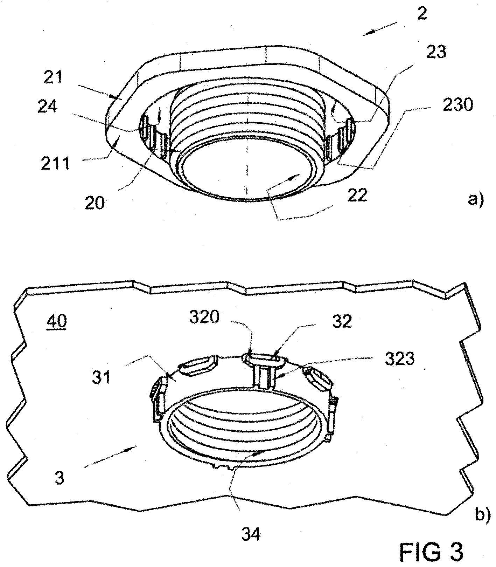

Die Teilbilder a) und b) der Fig. 2 zeigen jeweils einen Zustand, in dem das Einschraubteil 2 in den Fixiereinsatz 3 eingeschraubt ist, von der der Außenseite 210 gegenüberliegenden Unterseite bzw. Innenseite. Wie die Fig. 3a) und 4a) besser erkennen lassen, weist das Einschraubteil 2 vollständig umlaufend um den Schraubstutzen 20 herum einen Ringraum 24 auf, der radial im Abstand von dem Außenumfang des Schraubstutzen 20 von einem umlaufenden Umfangsrand 23 in dem Anlageflansch 21 begrenzt ist und auch axial gegenüber der Anlageseite 211 des Anlageflansches 21 von einer kreisringförmigen Begrenzungsfläche abgeschlossen ist. Der Umfangsrand 23 ist mit einer Eingriffstruktur versehen. Diese besitzt in Eindrehrichtung P abwechselnd radial in den Ringraum vortretende Eingriffelemente 230 und radial zurücktretende Vertiefungen. Vorteilhaft sind die Eingriffelemente 230 mit in Eindrehrichtung P angeordneten flachen Gleitflanken und entgegen der Eindrehrichtung P angeordneten steilen Stützflanken versehen. Die Innenwandfläche des Umfangsrands 23 mit der Eingriffstruktur ist in ihrer radialen Ausdehnung an den radialen Außenumfang der Anschlaganordnung des Fixiereinsatzes 3 so angepasst, dass bei Montage die Federzungen 35 mit den Eingriffgegenelementen in die Eingriffstruktur eingreifen und in Folge der federelastischen Anbindung mittels der Federzunge 35 in die zurücktretenden Vertiefungen der Eingriffstruktur jedenfalls beim Einschrauben des Einschraubteils 2 eintreten. Dadurch ist eine gewisse Verdrehsicherung des Einschraubteils 2 gegenüber dem Fixiereinsatz 3 entgegen der Eindrehrichtung P gegeben. Sind dabei die Eingriffelemente, wie in dem Teilbild a) der Fig. 2 gezeigt, als Anlagestücke 350 ausgebildet, d. h. beispielsweise auf ihrer Außenseite gerundet, so können sie beim Drehen des Einschraubteils 2 entgegen der Eindrehrichtung P auch an den steilen Gleitflanken der Eingriffelemente 230 bei entsprechend großer Drehkraft entlanggleiten, sodass die Eingriffstruktur in Wirkverbindung mit den Eingriffgegenelementen eine lösbare bzw. demontierbare Verdrehsicherung bildet. Sind hingegen die Eingriffgegenelemente mit Abstützstücken 351 versehen bzw. als solche ausgebildet, stützen sich diese an den steilen Stützflanken der Eingriffelemente 230 beim Drehen entgegen der Eindrehrichtung P ab, sodass keine zerstörungsfreie Demontage ermöglicht ist bzw. eine verriegelte Verdrehsicherung gegeben ist.

Die Teilbilder a) und b) der Fig. 3 stellen einen Montagevorgang des Montagesystems 1 dar, bei dem zunächst der Fixiereinsatz 3 in die Schnittstellenöffnung 44 der Schnittstelle 4 eingeführt und nach Drehen aus der ersten Drehstellung P1 (s. Fig. 5A) in die zweite Drehstellung P2 (s. Fig. 5B) an der Schnittstelle 4 fixiert ist. Danach wird das Einschraubteil 2 mit seinem Außengewinde 200 in das Innengewinde 34 des Fixiereinsatzes 3 eingeschraubt, bis es bei vollständiger Montage mit seiner Anlageseite 211 auf der Außenseite des Wandabschnitts 40 die Anschlaganordnung 30 radial übergreifend dicht anliegt (s. Fig. 5C).

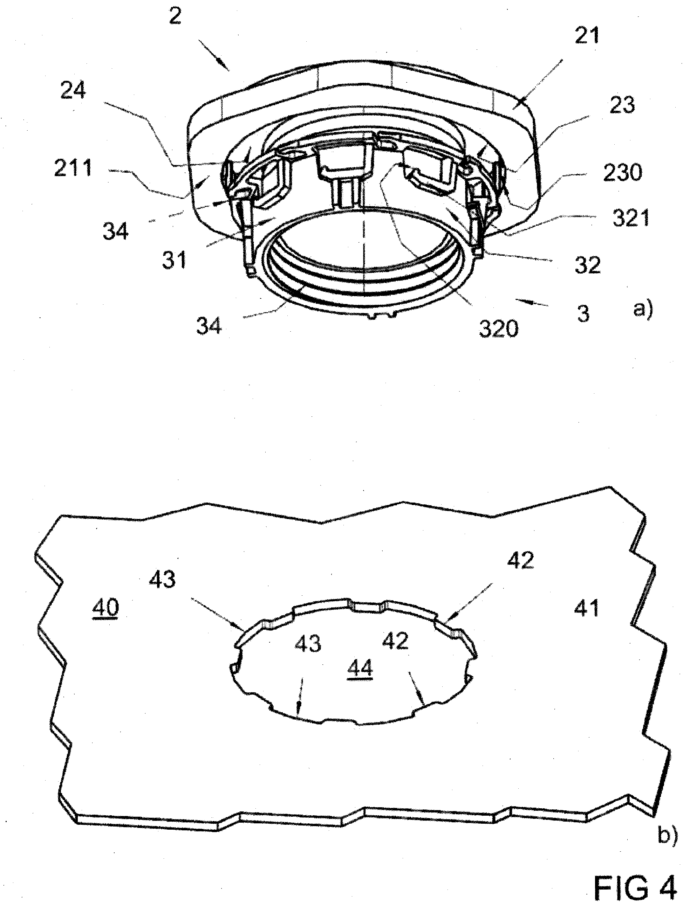

Die Teilbilder a) und b) der Fig. 4 stellen einen alternativen Montagevorgang dar, bei dem zunächst das Einschraubteil 2 in den Fixiereinsatz 3 teilweise, jedoch noch nicht vollständig wie bei der fertigen Montage eingeschraubt und damit vormontiert ist. Anschließend wird die vormontierte Einheit aus Fixiereinsatz 3 und Einschraubteil 2 mit dem Einführabschnitt 31 und den Fixierelementen 32 durch die Schnittstellenöffnung 44 in die Schnittstelle 4 eingeführt und anschließend so in Eindrehrichtung P gedreht, dass die Fixierelemente 32 mit dem Haltesteg 321 in axialer Richtung auf der Innenseite der Haltevorsprünge 42 der Schnittstelle 4 positioniert sind, wobei der jeweilige Anschlagsteg 322 an den jeweils zugeordneten Haltevorsprung 42 an dessen entgegen der Eindrehrichtung P liegendem Rand anschlägt und ein Weiterdrehen des Fixiereinsatzes 3 beim weiteren Eindrehen des Einschraubteils 2 verhindert. Dadurch wird der Fixiereinsatz 3 beim weiteren Eindrehen des Einschraubteils 2 entgegen der Einführrichtung R zur Innenseite des Wandabschnitts 40 bewegt und untergreift mit den Fixierelementen 32 die jeweiligen Haltevorsprünge 42, die dabei im lichten Bereich zwischen der jeweiligen Haltenase 320 und dem Anschlagsteg 322 liegen. Das Einschraubteil 2 kann dann soweit in Eindrehrichtung P weitergedreht werden, bis es fest und dichtend mit seiner Anlageseite 211 an der Außenseite des Wandabschnitts 40 anliegt.

Die Fig. 5A, 5B und 5C verdeutlichen den Fixiervorgang des Fixiereinsatzes 3 beispielsweise bei vormontiertem Einschraubteil 2 an dem Fixiereinsatz 3. Dabei zeigt die Fig. 5A den Zustand, bei dem der Fixiereinsatz 3 bei vormontiertem Einschraubteil 2 durch die Schnittstellenöffnung 44 in Einführrichtung R in der ersten Drehstellung P1 eingeführt ist, bei der die Fixierelemente 32 durch die Lücken 43 der Randkontur 41 geführt sind. Fig. 5B zeigt den Zustand, bei dem der Fixiereinsatz 3 nach Einführen durch die Schnittstellenöffnung 44 aus der ersten Drehstellung P1 in die zweite Drehstellung P2 gedreht ist, wobei die Fixierelemente 32 die betreffenden Haltevorsprünge 42 hinterlagern. Die Fig. 5C zeigt den Zustand, bei dem der Fixiereinsatz 3 mit seinen Fixierelementen 32 gegen die Unterseite der Haltevorsprünge 42 gezogen und das Einschraubteil 2 soweit eingedreht ist, dass es mit seiner Anlageseite 211 auf der Außenseite des Wandabschnitts 40 fest anliegt.

Das Montagesystem mit diesem Aufbau hat somit ersichtlich den Vorteil, dass es in stets gleicher Weise an verschieden dicken Wandabschnitten z. B. einer Gehäusewandung von einer äußeren Umgebung aus einfach angebracht werden kann, ohne dass z. B. Adapterteile bereitgehalten und ausgetauscht werden müssen. Damit können unterschiedlich ausgebildete Einsatzteile mit dem gleichen Montagesystem 1 problemlos an Gehäusen mit unterschiedlichen Wandstärken bei stets gleicher Ausführung des Fixierabschnitts aus Fixiereinsatz 3 und Randkontur 41 der Schnittstelle 4 zur Anwendung kommen. Vorteilhaft ist dies insbesondere z. B. für eine Montage unterschiedlicher oder auszutauschender Druckentlastungsvorrichtungen, wobei diese z. B. mit einem federgelagerten Ventildeckel oder einer Membrananordnung ausgebildet sein können, wie bereits vorstehend erwähnt.

## Patentansprüche

1. Montagesystem (1) zum Anbringen eines Einsatzteils in einer Wandöffnung insbesondere eines Gehäuses umfassend
- eine in einem Wandabschnitt (40), insbesondere eines Gehäuses, angeordnete oder anordenbare Schnittstelle (4), die eine um eine Durchführachse (A) angeordnete Schnittstellenöffnung (44) aufweist, welche von einer Randkontur (41) mit radial nach innen ragenden Haltevorsprüngen (42) und dazwischen liegenden Lücken (43) umlaufend umfasst ist,
- einen Fixiereinsatz (3), der einen Einführabschnitt (31) aufweist, welcher in einer Einführrichtung (R) in einer ersten Drehstellung (P1) von einer Außenseite durch die Schnittstellenöffnung (44) durchführbar und umfangsseitig mit radial aufgesetzten und sich in Umlaufrichtung erstreckenden Fixierelementen (32) und mit einer zylindrischen zentralen durchgehenden Einschrauböffnung (33) mit einem Innengewinde (34) versehen ist und an seinem bezüglich der Einführrichtung (R) hinteren Endabschnitt mit einer die Einschrauböffnung (33) umgebenden und die Schnittstellenöffnung (44) zumindest abschnittsweise radial überragenden Anschlaganordnung (30) begrenzt ist, und
- ein Einsatzteil, das als ein in das Innengewinde (34) einschraubbares Einschraubteil (2) mit einem Schraubstutzen (20) ausgebildet ist, welcher an seinem in Einführrichtung (R) hinteren Abschnitt in einen die Anschlaganordnung (30) im montierten Zustand ringsum vollständig umfassenden und an der Außenseite des Wandabschnitts (40) mit seiner Anlageseite in Anschlag gebrachten Anlageflansch (21) übergeht, in dem ein vollständig um den Schraubstutzen (20) umlaufender, von einer Innenwandfläche des Anlageflansches (21) umgrenzter Ringraum (24) ausgebildet ist,
wobei der Fixiereinsatz (3) im montierten Zustand mit den Fixierelementen (32) in eine die Haltevorsprünge (42) hintergreifende zweite Drehstellung (P2) gedreht ist und mit seiner Anschlaganordnung (30) vermittels des eingeschraubten Einschraubteils (2) in den Ringraum (24) eingezogen ist, wobei sich der Anlageflansch (21) mit seiner Anlageseite mit seiner den Ringraum (24) radial außen umgebenden Anlagefläche auf der Außenseite des Wandabschnitts (40) um die Schnittstellenöffnung (44) abstützt.

2. Montagesystem (1) nach Anspruch 1,
**dadurch gekennzeichnet,**
**dass** die Fixierelemente (32) jeweils einen in Umlaufrichtung verlaufenden Haltesteg (321) aufweisen, wobei die Haltestege (321) im montierten Zustand jeweils einen ihnen zugeordneten Haltevorsprung (42) hintergreifen, und
**dass** die Haltestege (321) an ihrem in Eindrehrichtung (P) vorderen Ende jeweils mit einer entgegen der Einführrichtung (R) zeigenden Haltenase (320) und an ihrem in Eindrehrichtung (P) hinteren Ende mit einem entgegen der Einführrichtung (R) verlaufenden Anschlagsteg (322) versehen sind und
**dass** der lichte Abstand zwischen der Haltenase (320) und dem Anschlagsteg (322) jeweils an die Ausdehnung eines Haltevorsprungs (42) so angepasst ist, dass im montierten Zustand jeweils ein Haltevorsprung (42) in Eindrehrichtung (P) an seinem Vorderrand von einer Haltenase (320) und an seinem Hinterrand von einem Haltesteg (322) eingefasst ist.

3. Montagesystem (1) nach Anspruch 1 oder 2,
**dadurch gekennzeichnet,**
**dass** die Eindrehrichtung (P) von der ersten Drehstellung (P1) in die zweite Drehstellung (P2) der Einschraubrichtung des Einschraubteils (2) entspricht.

4. Montagesystem (1) nach einem der vorhergehenden Ansprüche,
**dadurch gekennzeichnet,**
**dass** der Innenradius der den Ringraum (24) umgebenden Anlagefläche des Anlageflansches (21) mindestens so groß ist wie der Außenradius der Schnittstellenöffnung (44) im Bereich der Lücken (43).

5. Montagesystem (1) nach einem der vorhergehenden Ansprüche,
**dadurch gekennzeichnet,**
**dass** die den Ringraum (24) umgebende Innenwandfläche des Anlageflansches (21) umfangsseitig mit einer Eingriffstruktur versehen ist, welche sich in Umlaufrichtung abwechselnde radial in den Ringraum (24) vortretende Eingriffelemente (230) und radial zurücktretende Vertiefungen aufweist, und
**dass** die Anschlaganordnung (30) des Fixiereinsatzes (3) ringförmig ausgebildet ist und an ihrem radial außen liegenden Umfangsrand mit einer Eingriffgegenstruktur versehen ist, die beim Einschrauben des Einschraubteils (2) in die Einschrauböffnung (33) des Fixiereinsatzes (3) elastisch in die Vertiefungen der Eingriffstruktur eintretende Eingriffgegenelemente (350) aufweist.

6. Montagesystem (1) nach Anspruch 5,
**dadurch gekennzeichnet,**
**dass** die Eingriffelemente (230) mit in Eindrehrichtung (P) flachen Gleitflanken und entgegen der Eindrehrichtung (P) angeordneten steileren Stützflanken versehen sind und
**dass** die Eingriffgegenelemente (350) mit beim Eindrehen an den Gleitflanken der Eingriffelemente (230) entlang gleitenden Gleitflächen und entweder mit sich entgegen der Eindrehrichtung (P) an den Stützflanken abstützenden Stützflächen versehen sind oder mit weiteren Gleitflächen versehen sind, die beim Drehen entgegen der Eindrehrichtung (P) an der Eingriffstruktur entlang gleiten.

7. Montagesystem (1) nach Anspruch 5 oder 6,
**dadurch gekennzeichnet,**
**dass** die Eingriffgegenelemente (350) am Außenrandbereich der Anschlaganordnung (30) mittels jeweiliger Federzungen (35) angebunden, insbesondere einstückig angeformt, sind.

8. Montagesystem (1) nach einem der Ansprüche 1 bis 4,
**dadurch gekennzeichnet,**
**dass** die Innenwandfläche des Anlageflansches (21) ohne Eingriffstruktur ausgebildet ist, und
**dass** die Anschlaganordnung (30) des Fixiereinsatzes (3) ringförmig mit oder ohne Eingriffgegenstruktur ausgebildet ist.

9. Montagesystem (1) nach einem der vorhergehenden Ansprüche,
**dadurch gekennzeichnet,**
**dass** das Einschraubteil (2) an einem den Ringraum (24) auf dessen entgegen der Einführrichtung (R) begrenzenden kreisringförmigen Innenwandflächenbereich eine Eingriffstruktur aufweist, welche sich in Umlaufrichtung abwechselnde axial in den Ringraum (24) vortretende Eingriffelemente und axial zurücktretende Vertiefungen aufweist, und
**dass** die ringförmig ausgebildete Anschlaganordnung (30) des Fixiereinsatzes (3) in ihrer dem kreisringförmigen Innenwandflächenbereich zugewandten Stirnseite mit einer Eingriffgegenstruktur versehen ist oder keine Eingriffgegenstruktur aufweist.

10. Montagesystem (1) nach einem der vorhergehenden Ansprüche,
**dadurch gekennzeichnet,**
**dass** an der Anlagefläche des Anlageflansches (21) ein umlaufendes Dichtungselement zur Abdichtung zwischen der Außenseite des Wandabschnitts (40) und dem Anlageflansch (21) angeordnet ist.

11. Montagesystem (1) nach einem der vorhergehenden Ansprüche,
**dadurch gekennzeichnet,**
**dass** das Einschraubteil (2) als Druckentlastungseinsatz ausgebildet ist, der bei Anordnung des Montagesystems (1) in einem Wandabschnitt (40) eines Gehäuses, beispielsweise eines Batteriegehäuses, bei Überschreiten einer vorgegebenen Druckdifferenz zwischen dem Gehäuseinnern und der Gehäuseumgebung eine in ihr ausgebildete Druckausgleichskanalanordnung öffnet.

12. Montagesystem (1) nach Anspruch 11,
**dadurch gekennzeichnet,**
**dass** in dem Strömungsweg der Druckausgleichskanalanordnung eine fluidundurchlässige Membran und/oder eine gasdurchlässige aber flüssigkeitsundurchlässige Membran angeordnet ist/sind und
**dass** das Einschraubteil (2) auf seiner Außenseite mit einer Schutzabdeckung versehen ist, um feste Partikel von der Membran abzuhalten.

13. Verfahren zum Anbringen eines Einsatzteils in einer Wandöffnung, insbesondere eines Gehäuses, mittels eines Montagesystems nach einem der vorhergehenden Ansprüche, bei dem
- in einem ersten Schritt in einem Wandabschnitt (40) insbesondere eines Gehäuses eine Schnittstelle (4) bereitgestellt wird, die eine um eine Durchführachse (A) angeordnete Schnittstellenöffnung (44) aufweist, welche von einer Randkontur (41) mit radial nach innen ragenden Haltevorsprüngen (42) und dazwischen liegenden Lücken (43) umlaufend umfasst wird,
- in einem weiteren Schritt in die Schnittstellenöffnung (44) in einer Einführrichtung (R) in Richtung der Durchführachse (A) ein Fixiereinsatz (3) mit einem Einführabschnitt (31) in einer ersten Drehstellung (P1), in der radial außen auf dem Einführabschnitt (31) angeordnete, sich in Umlaufrichtung erstreckende Fixierelemente (32) in axialer Richtung mit den Lücken (43) der Schnittstelle (4) in Deckung gebracht sind, eingeführt und anschließend in eine zweite Drehstellung (P2) gedreht wird, in der die Fixierelemente (32) in axialer Richtung mit den Haltevorsprüngen (42) in Deckung gebracht sind, wobei eine bezüglich der Einführrichtung (R) am hinteren Endabschnitt des Einführabschnitts (31) angeformte Anschlaganordnung (30) die Schnittstellenöffnung (44) außen radial übergreift, und
- in einem folgenden Schritt ein Einschraubteil (2), das bereits vor dem Einsetzen des Fixierteils (3) in die Schnittstellenöffnung (44) in ein Innengewinde (34) des Einführabschnitts (31) eingeschraubt wurde oder nach Einsetzen des Fixierteils (3) eingeschraubt wird, fest angezogen wird, so dass es mit einem die Anschlaganordnung (30) des Fixiereinsatzes (3) radialseitig umfassenden Anlageflansch gegen die Außenseite des Wandabschnitts (40) bewegt und der Fixiereinsatz (3) mit seinen Fixierelementen (32) gegen die Haltevorsprünge (42) der Schnittstellenöffnung (44) gezogen wird, sodass bei fertiger Montage der die Schnittstellenöffnung (44) umgebende Bereich des Wandabschnitts (40) fest und gedichtet zwischen der Anlagefläche des Anlageflansches (21) und den Fixierelementen (32) des Fixierteils eingespannt wird.

14. Bausatz für ein Montagesystem (1) nach einem der Ansprüche 1 bis 12,
**dadurch gekennzeichnet,**
**dass** mindestens zwei verschiedene Einschraubteile (2) vorhanden sind, von denen mindestens eins als Druckentlastungseinsatz ausgebildet ist.

15. Bausatz nach Anspruch 14,
**dadurch gekennzeichnet,**
**dass** ein Druckentlastungseinsatz als Verschlusselement in einer Druckausgleichskanalanordnung mindestens ein mittels Federkraft einer Federanordnung in Schließstellung gehaltenes, insbesondere plattenförmiges oder pilzkopfförmiges, Schließelement aufweist und ein weiterer Druckentlastungseinsatz als Verschlusselement eine fluiddichte Membran oder eine gasdurchlässige aber flüssigkeitsdichte Membran aufweist.
